# EUROPEAN PATENT APPLICATION

(11) **EP 1 487 157 A2**
(43) Date of publication of application: **15.12.2004**
(21) Application number: 04013524.6
(22) Date of filing: 08.06.2004
(51) Int. Cl.: H04L 12/40, H04L 29/06

(54) **Information data transmitting and receiving device and transmitting and receiving method of information data**

(30) Priority: 10.06.2003 JP 2003165165
(71) Applicant: Pioneer Corporation, Meguro-ku, Tokyo (JP)
(72) Inventor: Matsumaru, Makoto, Tokorozawa-City, Saitama (JP); Onodera, Wataru, Tokorozawa-City, Saitama (JP); Minoshima, Kunihiro, Tokorozawa-City, Saitama (JP); Ono, Kinya, Tokorozawa-City, Saitama (JP); Usuba, Hidemi, Tokorozawa-City, Saitama (JP)
(74) Representative: Betten & Resch

(57) **Abstract**

An information data transmitting and receiving device is provided, which can reduce a load of a host CPU. In this information data transmitting and receiving device, in a case where an identifier of received information data is coincident with a predetermined identifier, the received information data is stored in a first receiving buffer. In a case where those identifiers are different from each other, the received information data is stored in a second receiving buffer.

## Description

### BACKGROUND OF THE INVENTION

### 1. Field of the Invention

The present invention relates to an information data transmitting and receiving device and a method for transmitting and receiving information data.

### 2. Description of the Related Art

As an interface for transmitting information data between a plurality of information processing devices, a high-speed serial data transfer interface based on IEEE (Institute of Electrical and Electronics Engineers) 1394-1995 standard (hereinafter, simply referred to as IEEE 1394) is presently known. In the transmission in accordance with IEEE 1394, information data is transmitted in form of data packets, and isochronous transmission for transmission of synchronous data and asynchronous transmission for transmission of asynchronous data are alternately performed. The isochronous transmission is used for transmitting time-series data that must be transmitted in real time, such as audio data and video data. On the other hand, the asynchronous transmission is used for transmitting asynchronous data, and gives each data packet a sending node ID indicating an address of a sender device and a receiving node ID indicating an address of a receiver device. Each information processing device obtains the packet to which its ID (self-ID) is assigned as the receiving node ID.

In recent years, a transmission device has been proposed that is based on "IP over 1394" standard in which IP (Internet protocol) packets are transmitted on an IEEE 1394 bus (see Japanese Patent Kokai No. 2002-111701, for example). In accordance with "IP over 1394" standard, the IP packet is asynchronously transmitted by using the aforementioned asynchronous transmission and the IP packet can be issued only to a particular address.

Thus, a host CPU has to perform an identifying process for the IP packet by using the particular address when receiving the asynchronous packet. Therefore, there was a problem that the load of the host CPU became larger so as to decrease throughput.

### SUMMARY OF THE INVENTION

It is an object of the present invention to provide an information data transmitting and receiving device and a method for transmitting and receiving information data, which are capable of reducing the load of the host CPU.

An information data transmitting and receiving device according to the present invention can transmit and receive information data to which an identifier is assigned through a transmission bus. The device has a first receiving buffer and a second receiving buffer, and a receiving buffer selecting circuit for storing the received information data in the first receiving buffer when the identifier of the received information data is coincident with a predetermined identifier, and for storing the received information data in the second receiving buffer when the identifier of the received information data is different from the predetermined identifier.

A method for transmitting and receiving information data according to the present invention can perform transmission and reception of information data to which an identifier is assigned through a transmission bus. The method has the step of selecting among a first receiving buffer and a second receiving buffer, for storing the received information data in the first receiving buffer when the identifier of the received information data is coincident with a predetermined identifier, and for storing the received information data in the second receiving buffer when the identifier of the received information data is different from the predetermined identifier

### BRIEF DESCRIPTION OF THE DRAWINGS

Fig. 1 is a block diagram showing an IEEE 1394 interface portion 2 as a transmitting and receiving device according to the present invention;
Fig. 2 is a flowchart showing an exemplary asynchronous packet receiving and processing sub-routine executed by a host CPU 1 shown in Fig. 1; and
Fig. 3 is a block diagram showing another exemplary configuration of the IEEE 1394 interface portion 2 as the transmitting and receiving device according to the present invention.

### DETAILED DESCRIPTION OF THE INVENTION

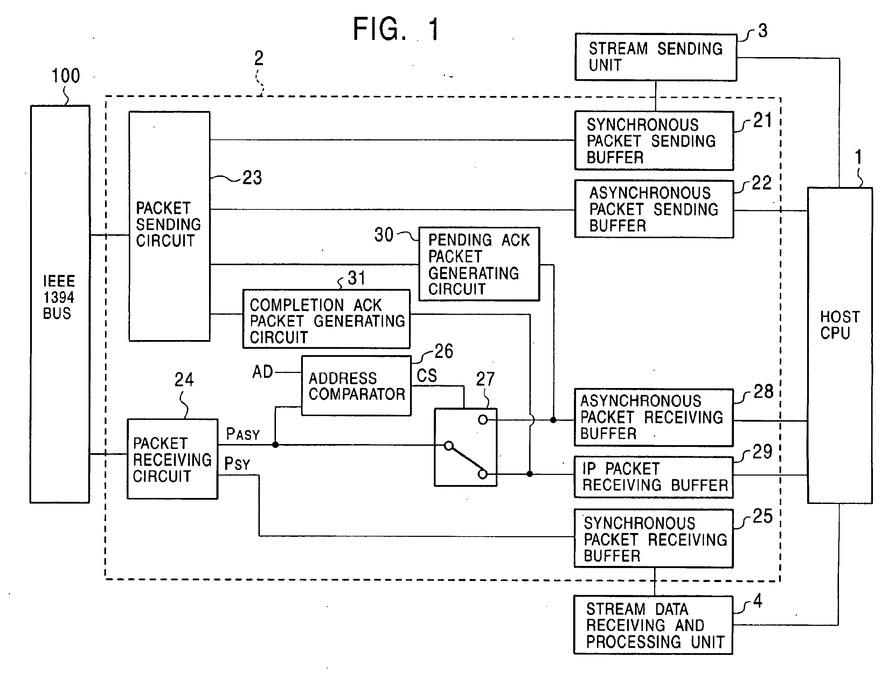

Fig. 1 shows an IEEE 1394 interface portion provided on an information processing device.

In Fig. 1, a host CPU (Central Processing Unit) 1 performs various types of control for main operations of this information processing device (operations as information terminal equipment, for example). The host CPU 1 also controls the IEEE 1394 interface portion 2 for transmitting and receiving information data via an IEEE 1394 bus 100.

In a case where stream data is sent to another device connected to the IEEE 1394 bus 100 by using isochronous transmission, the host CPU 1 controls a stream sending unit 3 to supply that stream data to a synchronous packet sending buffer 21. On the other hand, in a case where that stream data is sent to another device connected to the IEEE 1394 bus 100 by using asynchronous transmission, the host CPU 1 supplies that stream data to an asynchronous packet sending buffer 22.

The synchronous packet sending buffer 21 sequentially stores the stream data to be sent as synchronous data packets in accordance with rules of isochronous transmission in IEEE 1394, and supplies those packets to a packet sending circuit 23.

The asynchronous packet sending buffer 22 sequentially stores the information data to be sent as asynchronous data packets in accordance with rules of asynchronous transmission in IEEE 1394, and supplies those packets to the packet sending circuit 23.

The packet sending circuit 23 sends the synchronous data packet, the asynchronous data packet and a response packet supplied from the host CPU 1, to the IEEE 1394 bus 100 in accordance with rules in IEEE 1394.

The packet receiving circuit 24 receives the synchronous data packet and the asynchronous data packet that were transmitted via the IEEE 1394 bus 100. The packet receiving circuit 24 then supplies the thus received synchronous data packets to a synchronous packet receiving buffer 25 as synchronous data packets P_{SY}, and also supplies the thus received asynchronous data packets to an address comparator 26 and a demultiplexer 27 as asynchronous data packets P_{ASY}. The synchronous packet receiving buffer 25 takes in and stores the synchronous data packets P_{SY} sequentially. The host CPU 1 makes the synchronous packet receiving buffer 25 supply such synchronous data (stream data) to a stream data receiving and processing unit 4.

The address comparator 26 compares an address (i.e., identifier) of the asynchronous data packet P_{ASY} to a particular address AD (i.e., predetermined identifier) as an IP (Internet protocol) address based on rules of "IP over 1394". In a case where those addresses are coincident with each other, the address comparator 26 supplies a comparison-result signal CS of a logical level 1 to the demultiplexer 27. On the other hand, in a case where those addresses are different from each other, the address comparator 26 supplies a comparison-result signal CS of a logical level 0 to the demultiplexer 27. Please note that the particular address AD can be changed to a given address by the host CPU 1.

The demultiplexer 27 supplies the asynchronous data packet P_{ASY} to an asynchronous packet receiving buffer 28 when the comparison-result signal is at logical level 0. The demultiplexer 27 supplies the asynchronous data packet P_{ASY} to an IP packet receiving buffer 29 when the comparison-result signal is at logical level 1. In other words, when the address of that asynchronous data packet P_{ASY} is coincident with the particular address AD, the demultiplexer 27 determines that asynchronous data packet P_{ASY} as an IP packet, and supplies that asynchronous data packet P_{ASY} to the IP packet receiving buffer 29. On the other hand, when the address of that asynchronous data packet P_{ASY} is different from the particular address AD, the demultiplexer 27 supplies that asynchronous data packet P_{ASY} to the asynchronous packet receiving buffer 28. The asynchronous packet receiving buffer 28 takes in the asynchronous data packets P_{ASy} sequentially and stores them therein. The IP packet receiving buffer 29 takes in the asynchronous data packets P_{ASY} as IP packets sequentially and stores them therein.

In a case where the asynchronous data packet P_{ASY} is supplied to the asynchronous packet receiving buffer 28 via the demultiplexer 27, a pending ACK packet generating circuit 30 generates a pending ACK packet indicating that acknowledgement is pending and supplies it to the packet sending circuit 23. In this case, the packet sending circuit 23 then sends that pending ACK packet to the IEEE 1394 bus 100. In other words, in a case where the address of the received asynchronous data packet P_{ASY} is different from the particular address AD, information indicating that acknowledgement is pending (pending ACK packet) is sent to the IEEE 1394 bus 100.

In a case where the asynchronous data packet P_{ASY} is supplied to the IP packet receiving buffer 29 via the demultiplexer 27, a completion ACK packet generating circuit 31 generates a completion ACK packet indicating that acknowledgement has been completed and supplies it to the packet sending circuit 23. In this case, the packet sending circuit 23 sends that completion ACK packet to the IEEE 1394 bus 100. In other words, in a case where the address of the received asynchronous data packet P_{ASY} is coincident with the particular address AD, information indicating that acknowledgement has been completed (completion ACK packet) is sent to the IEEE 1394 bus 100.

Next, a transmitting and receiving operation of the IEEE 1394 interface portion 2 shown in Fig. 1 in asynchronous transmission is described.

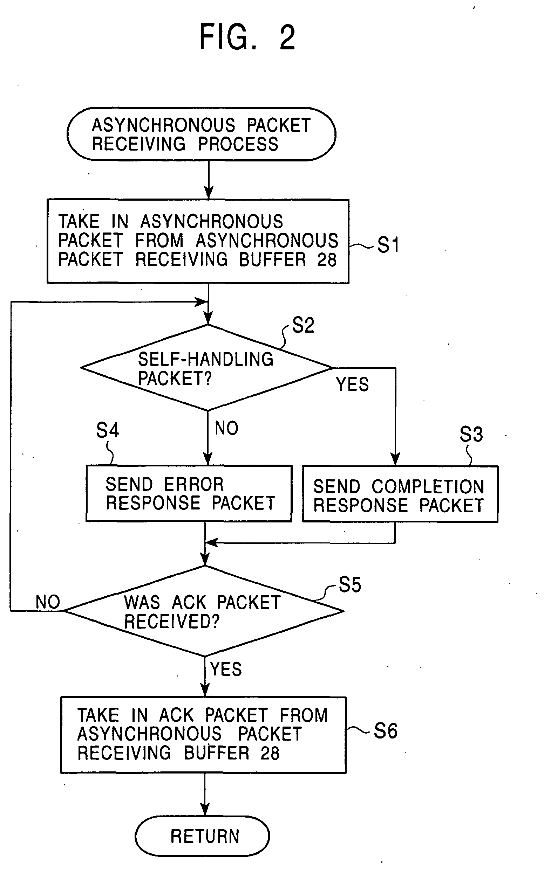

First, in a case where an asynchronous data packet other than an IP packet is received via the IEEE 1394 bus 100, this asynchronous data packet is supplied to the asynchronous packet receiving buffer 28 via the demultiplexer 27. In this case, a pending ACK packet generated in the pending ACK packet generating circuit 30 is sent to the IEEE 1394 bus 100. The host CPU 1 then executes an asynchronous packet receiving and processing sub-routine shown in Fig. 2.

In Fig. 2, the host CPU 1 takes in the asynchronous packet stored in the asynchronous packet receiving buffer 28 (Step S1). The host CPU 1 determines based on the asynchronous packet's address and/or data type whether or not the asynchronous packet is a self-handling packet (Step S2). When the asynchronous packet is determined as a self-handling packet in Step S2, the host CPU 1 generates a completion response packet and supplies it to the asynchronous packet sending buffer 22 (Step S3). When the asynchronous packet is determined that it is not a self-handling packet in Step S2, the host CPU 1 generates an error response packet and supplies it to the asynchronous packet sending buffer 22 (Step S4). By execution of Step S3 or S4, the asynchronous packet sending buffer 22 sends the completion response packet or the error response packet to the IEEE 1394 bus 100. Then, another information processing device that has received the above response packet on the IEEE 1394 bus 100 sends an ACK packet to the IEEE 1394 bus 100. When receiving this ACK packet, the packet receiving circuit 24 supplies it to the address comparator 26 and the demultiplexer 27. The ACK packet is then supplied to the asynchronous packet receiving buffer 28 from the demultiplexer 27 and is stored in the asynchronous packet receiving buffer 28. After execution of step S3 or S4, the host CPU 1 determines whether or not the asynchronous packet receiving buffer 28 stores any ACK packet for a certain period (Step S5). In a case where it is determined in Step S5 that no ACK packet has been received in the certain period, the host CPU 1 returns to Step S2 and sends the completion response packet or the error response packet that was sent until just before the determination in Step S5 again. In a case where it is determined in Step S5 that the asynchronous packet receiving buffer 28 has stored the ACK packet therein, the host CPU 1 takes in the ACK packet from the asynchronous packet receiving buffer 28 (Step S6). After executing Step S6, the host CPU 1 exits this asynchronous packet receiving and processing sub-routine and returns to a main routine (not shown).

On the other hand, in a case where the asynchronous packet corresponding to an IP packet is received via the IEEE 1394 bus 100, the address comparator 26 determines this asynchronous packet as the IP packet. Thus, this asynchronous packet is stored in the IP packet receiving buffer 29 dedicated to IP packet storage. Moreover, when the IP packet is received, a completion ACK packet indicating that acknowledgement has been completed is sent to the IEEE 1394 bus 100 immediately, without processing by the host CPU 1. Thus, the sending process of the response packet and the receiving process of the ACK packet in Steps S3-S5 performed by the host CPU 1 can be omitted.

Therefore, it is possible to reduce the load of the host CPU 1.

In the above embodiment, the host CPU 1 for controlling main operations of the information processing device is also used for controlling the transmitting and receiving operation by the IEEE 1394 interface portion 2. However, a built-in CPU dedicated to control of the transmitting and receiving operation by the IEEE 1394 interface portion 2 may be provided in the IEEE 1394 interface portion 2.

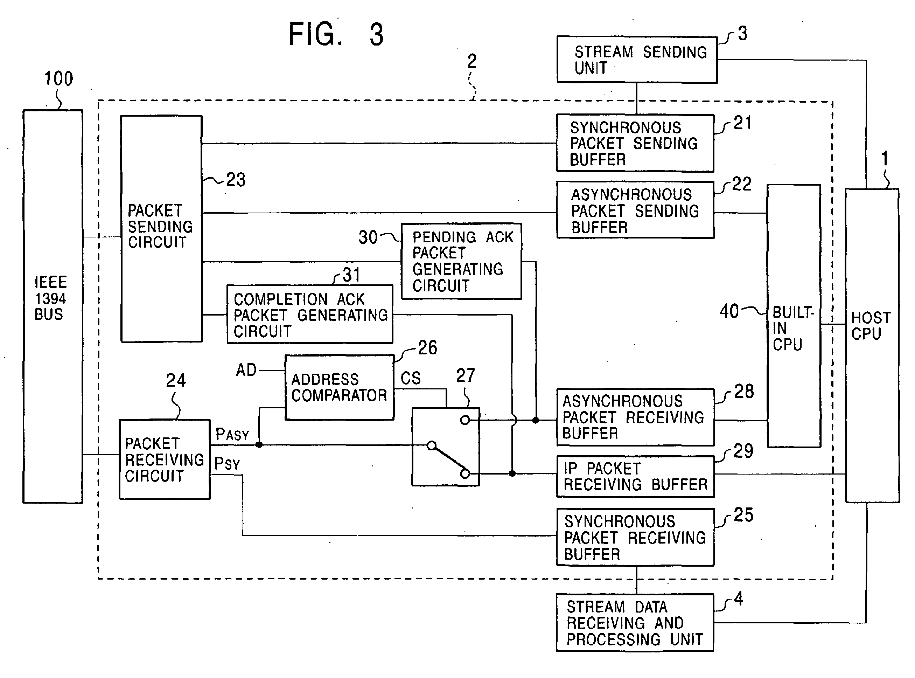

Fig. 3 shows another exemplary configuration of the IEEE 1394 interface portion 2, considering the above.

The IEEE 1394 interface portion 2 shown in Fig. 3 has the same structure as that shown in Fig. 1 except that a built-in CPU 40 is added. In other words, the built-in CPU 40 performs the same control as that performed by the host CPU 1 shown in Fig. 1. However, it should be noted that the host CPU 1 performs the processing of the IP packet only.

## Claims

1. An information data transmitting and receiving device for transmitting and receiving information data through a transmission bus, said information data having an identifier, the device comprising:
a first receiving buffer;
a second receiving buffer; and
a receiving buffer selecting circuit for storing received information data in said first receiving buffer when said identifier of said received information data is coincident with a predetermined identifier, and for storing said received information data in said second receiving buffer when said identifier of said received information data is different from said predetermined identifier.

2. The information data transmitting and receiving device according to claim 1, wherein said receiving buffer selecting circuit comprises:
a comparator for determining whether or not said identifier of said received information data is coincident with said predetermined identifier; and
a demultiplexer for supplying said received information data to said first receiving buffer when said comparator determines that said identifier is coincident with said predetermined identifier, and for supplying said received information data to said second receiving buffer when said comparator determines that said identifier is different from said predetermined identifier.

3. The information data transmitting and receiving device according to claim 1 or 2, further comprising an acknowledgement completion information sending circuit for sending, to said transmission bus, information indicating that acknowledgement is completed when said identifier of said received information data is coincident with said predetermined identifier.

4. The information data transmitting and receiving device according to claim 3, further comprising an acknowledgement pending information sending circuit for sending, to said transmission bus, information indicating that acknowledgement is pending when said identifier of said received information data is different from said predetermined identifier.

5. The information data transmitting and receiving device according to one of claims 1 to 4, wherein said transmission bus is compliant with IEEE 1394 standard, and
said predetermined identifier is an Internet protocol address.

6. A method for transmitting and receiving information data through a transmission bus, said information data having an identifier, the method comprising the step of selecting among a first receiving buffer and a second receiving buffer, for storing received information data in said first receiving buffer when said identifier of said received information data is coincident with a predetermined identifier, and for storing said received information data in said second receiving buffer when said identifier of said received information data is different from said predetermined identifier.
